# EUROPÄISCHE PATENTSCHRIFT

(11) **EP 0 463 512 B1**
(45) Veröffentlichungstag und Bekanntmachung des Hinweises auf die Patenterteilung: **02.08.1995**
(21) Anmeldenummer: 91109797.0
(22) Anmeldetag: 14.06.1991
(51) Int. Cl.: C08K 3/16, C08K 5/18, C08K 5/50

(54) **Stabilisatorkombinationen und ihre Verwendung zur Herstellung von stabilisierten, schlagzähmodifizierten Polyamiden**
Stabilisator combinations and their use in the preparation of stabilized, impact modified polyamides
Combinaison de stabilisateurs et leur utilisation pour la production de polyamides stabilisés et résistants aux chocs

(30) Priorität: 27.06.1990 DE 4020447
(43) Veröffentlichungstag der Anmeldung: 02.01.1992
(73) Patentinhaber: BAYER AG, 51368 Leverkusen (DE)
(72) Erfinder: Stahlke, Kurt-Rainer, Dr., W-5067 Kürten 2 (DE); Döring, Joachim, Dr. c/o Bayer Japan Ltd., Minatoku, Tokyo 108 (JP); Buysch, Hans-Josef, Dr., W-4150 Krefeld (DE)

(56) Entgegenhaltungen:
- EP-A- 0 084 108
- EP-A- 0 291 833
- CH-A- 472 458
- DE-A- 2 254 408

## Beschreibung

Gegenstand der Erfindung sind Stabilisatorkombinationen aus Cu^{I}-halogeniden, Triphenylphosphinen, gegebenenfalls Alkalihalogeniden, sowie Aminen, vorzugsweise aromatischen Aminen; ein Verfahren zur Stabilisierung unter Verwendung dieser Stabilisatorkombinationen und entsprechend stabilisierte, schlagzähmodifizierte Polyamide mit Cu^{I}-halogenid/Triphenylphosphin (evtl. Alkalihalogeniden) und Amine enthaltenden Stabilisatorkombinationen in bestimmten Mengen.

Es ist bekannt, Polyamide zur Verbesserung ihrer Schlagzähigkeit, insbesondere ihrer Tieftemperaturzähigkeit bis -40°C, mit thermoplastischen Kautschuken als Schlagzähmodifikatoren zu versetzen. Es werden dabei beispielsweise Olefin/Acrylsäureester/Acrylsäure Terpolymere, Olefin/Acrylsäure/Maleinsäureanhydrid Terpolymere oder Maleinsäureanhydrid gepfropfte EPM/EPDM-Kautschuke eingesetzt (s. z.B. US 41 74 358, DE-AS 1 241 606).

Bei allen eingesetzten elastomermodifizierten (schlagzähen) Polyamidmischungen wird jedoch ein deutlicher Abbau der Schlagzähigkeit nach Alterung bei erhöhten Temperaturen beobachtet. Das Alterungsverhalten läßt sich zwar durch in Polyamid üblicherweise eingesetzte Stabilisatoren verbessern, jedoch sinkt die Schlagzähigkeit nach thermischer Alterung in der Regel auf den Wert nicht stabilisierten Polyamids.

In der Praxis übliche Polyamid-Stabilisatoren auf Basis von Kupfersalzen werden im Kunststoff-Handbuch, VI, 238 (1966), Carl-Hanser-Verlag, München beschrieben; ebenfalls sind dort sterisch gehinderte Phenole als Antioxidantien benannt.

Aminische Stabilisatoren sind in J. Voigt "Die Stabilisierung der Kunststoffe gegen Licht und Wärme", Springer Verlag, 1966, S. 455 ff. angeführt. Diese Verbindungen gelten jedoch als nicht farbstabil. Hinreichend farbstabile, aminische Stabilisatoren werden in der EP-A-84 108 beschrieben.

Aus der EP-A 291 833 und 275 910 sind mit kupfer-, halogen- und phosphorhaltigen Verbindungen bzw. mit speziellen Diphenylaminen stabilisierte Polyamidformmassen bekannt.

Ein Problem bleibt jedoch in der Stabilisierung schlagzähmodifizierter Polyamide, sowie in der Verbesserung der Thermostabilität.

Es wurde nun überraschenderweise gefunden, daß eine besonders gute, besonders thermische Langzeitstabilisierung von elastomere Schlagzähmodifikatoren enthaltenden Polyamiden erreicht wird, wenn zu den oben beschriebenen Stabilisatoren auf Basis von Cu^{I}-Salzen sowie Triphenylphosphinen zusätzlich Amin-Verbindungen gegeben werden und in den Stabilisatorkombinationen bestimmte Mengenverhältnisse eingehalten werden.

Die erfindungsgemäßen Stabilisatorkombinationen für schlagzäh modifizierte Polyamide sind durch folgende Zusammensetzungen gekennzeichnet:
a) Cu^{I}-halogenid (bevorzugt Cu^{I}-chlorid, Cu^{I}-bromid, (Cu^{I}-iodid) insbesondere Cu^{I}-iodid
b) Triphenylphosphin
c) gegebenenfalls Alkalihalogenide (bevorzugt Li-Na- und K-chloride, -bromide und -iodide, insbesondere LiCl und KBr, und
d) Amine der Formel I 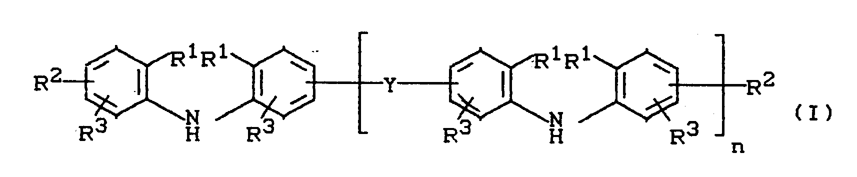
in der
- R¹ und R³: gleich oder verschieden, Wasserstoff, eine CH₃-, C₂H₅- oder Isopropylgruppe bedeuten, wobei R³ in o-, m- und p-Stellung zum N-Atom stehen kann,
- R²: für Wasserstoff, eine C₄-C₁₂-Alkyl-, C₇-C₁₂-Aralkyl- oder C₅-C₁₂-Cycloalkylgruppe vorzugsweise für Wasserstoff, einen Benzyl-, Styryl-, Methylstyryl-, tert.-Butyl-, tert.-Amyl-, Isononyl-, Cyclohexyl-, Methylcyclohexylrest oder einen der folgenden Reste 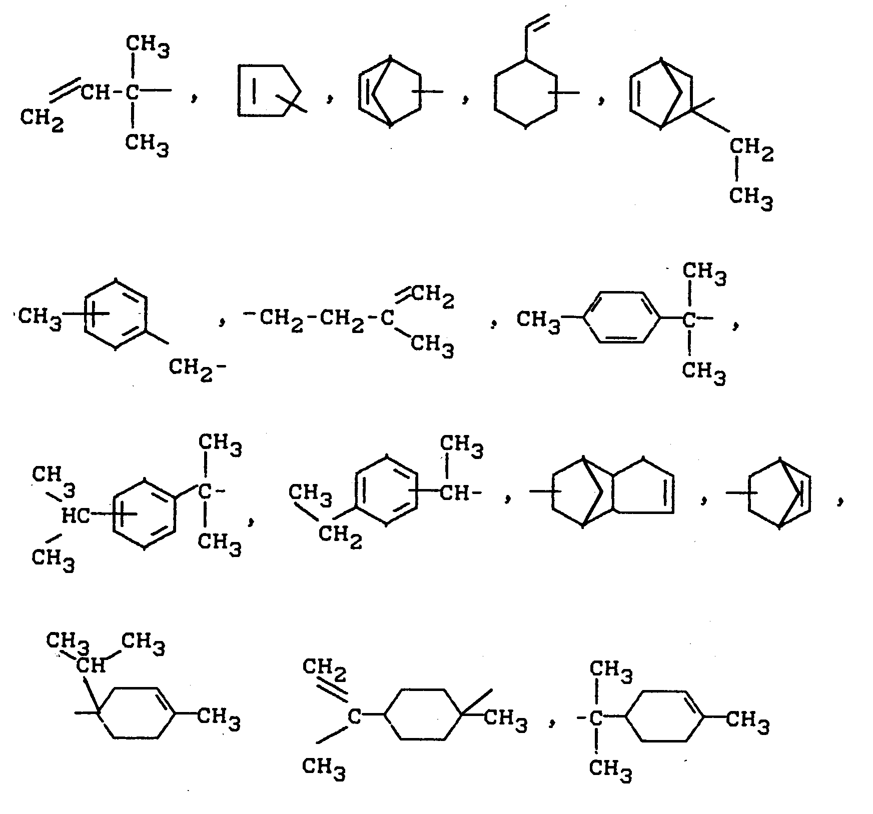 und in o- oder p-Stellung zum N-Atom stehen kann,
- n: eine ganze Zahl von 1-29, vorzugsweise 1-19 darstellt, besonders bevorzugt 1-12 und
- Y: für einen bifunktionellen, nicht monoolefinisch ungesättigten Rest mit der Bedeutung von R² mit Ausnahme von Wasserstoff steht und außerdem bis zu 50 Mol %, vorzugsweise 40 Mol-%,
-CH₂-O-CH₂-, -CH₂-S-CH₂-, -S- oder =CH-R⁴ mit R⁴ Wasserstoff, C₁-C₆-Alkyl oder C₅-C₆-Cycloalkyl bedeuten kann und in o-oder p-Stellung zum N-Atom steht
und/oder Diphenylamin
wobei das Gewichtsverhältnis von a) zu b) 3:1 bis 1:3 (vorzugsweise 2:1 bis 1:2; insbesondere 1,2:1 bis 0,8:1),
das Gewichtsverhältnis von (a + b) : c (falls c) vorhanden) 1:7,5 bis 2,5:1, vorzugsweise 1:4 bis 1:1, insbesondere etwa 1:2,5 bis 1:3,5
und das Gewichtsverhältnis von (a + b + c) : (d) von 0,5:1 bis 1:20, bevorzugt 0,75:1 bis 1:10, insbesondere 1,0:1 bis 1:5 beträgt.

Man kann die Stabilisator-Komponenten a) bis d) einzeln, in beliebigen Gruppen oder alle gemeinsam, mit den Polyamiden, den elastomeren Schlagzäh-Modifikatoren oder den schlagzäh-modifizierten Polyamiden nach beliebigen an sich bekannten Methoden (vorzugsweise in der Schmelze) vermischen.

Teile (z.B. a), (a + b), b) oder (a + b + c) und/oder d) oder ( b + d) - sowie alle anderen denkbaren Teilkombinationen, oder alle Stabilisatorkomponenten (a + b + c + d) gemeinsam, können auch als Konzentrate (Masterbatche) In Polymeren wie Polyolefinen, vorzugsweise aber in Polyamiden, Schlagzähmodifikatoren oder schlagzäh-modifizierten Polyamiden, vorliegen und eingearbeitet werden.

Bestimmte Stabilisatorkomponenten können auch bereits in den (schlagzähmodifizierten) Polyamiden enthalten sein, z.B. Triphenylphosphine, und die weiteren Komponenten der Stabilisatoren können als solche oder als Masterbatche einzeln oder gemeinsam, zugemischt werden.

Entscheidend ist letzlich der Gehalt an Stabilisatorkomponenten innerhalb der schlagzähmodifizierten Polyamidmassen.

Weiterer Erfindungsgegenstand ist die Verwendung der erfindungsgemäßen Stabilisator-Kombination in einem Verfahren zur Herstellung stabilisierter, schlagzähmodifizierter Polyamide, wobei 0,05 bis 5 Gew.-% der Stabilisator-Kombination, vorzugsweise 0,05 bis 2,5 Gew.-%, insbesondere 0,1 - 2 Gew.-%, gegebenenfalls in Form von Konzentraten in Polymeren, in die schlagzähmodifizierten Polyamide eingemischt werden.

Weiterer Erfindungsgegenstand sind stabilisierte, schlagzähmodifizierte Polyamide, welche
95 - 99,95 Gew.-% schlagzähmodifizierte Polyamide
die aus
50 - 99 Gew.-%, bevorzugt 75 - 97, insbesondere
85 - 95 Gew.-% an Polyamiden
und
1 - 50 Gew.-%, bevorzugt 3 - 35, insbesondere
5 - 15 Gew.-% an thermoplastisch einarbeitbaren,
elastomeren, Schlagzähmodifikatoren bestehen
und
0,05 - 5 Gew.-% an Stabilisatorkombinationen (a - d)
sowie gegebenenfalls zusätzlich übliche, weitere Zusatzstoffe wie Füllstoffe, Verstärkungsstoffe wie Glasfasern oder Hochmodul-organische Fasern, Farbstoffe, Pigmente, weitere Antioxidantien/UV- oder Thermostabilisatoren, Verarbeitungshilfsmittel oder Flammschutzmittel
enthalten.

Dabei sind in den stabilisierten. schlagzähmodifizierten Polyamiden insbesondere
0,01 - 1 Gew.-%, vorzugsweise 0,02 - 0,40 und
insbesondere 0,03 - 0,25
an Cu^{I}-halogeniden (a), insbesondere CuBr oder Cu-iodid
0,02 - 3 Gew.-%, vorzugsweise 0,02 - 1,5
insbesondere 0,03 - 0,75 Gew.-%
Triphenylphosphin,
gegebenenfalls bis 3 Gew.-% an Alkalihalogeniden
und
0,05 - 5 Gew.-%, vorzugsweise 0,1 - 3 Gew.-% und insbesondere 0,2 1 Gew.-% an Aminen d)
enthalten.

Amine d) im Sinne der Erfindung sind aliphatische Amine mit wenigstens 2 Aminogruppen, die durch Alkylenreste mit 2-12 C-Atomen miteinander verknüpft sind, vorzugsweise aber solche mit 3 bis 7 Aminogruppen, die jeweils durch C₂-C₄-Alkylenreste miteinander verknüpft sind. Es sind dies weiterhin bevorzugt aromatische Amine vom Diphenylamintyp, wobei das Diphenylamin in den aromatischen Kernen auch durch aliphatische Reste von 1-12 C-Atomen, durch araliphatische Reste mit 7-17 C-Atomen, durch Aminogruppen, Aminoalkylgruppen mit 1-12 C-Atomen, durch Hydroxyl- oder Hydroxyalkylgruppen mit 1-6 C-Atomen oder durch Arylgruppen mit 6-10 C-Atomen, substituiert sein kann. Als Amine d) gelten ferner Kondensate aus Carbonylverbindungen wie Formaldehyd, Acetaldehyd oder Aceton und gegebenenfalls substituierten Diphenylaminen oder Phenothiazinen, wie sie beispielsweise in der DE-AS 1 123 103 und DE-AS 1 152 252 beschrieben sind.

Die Diphenylamin-Kondensate können auch durch Kohlenstoffbrücken miteinander verknüpft sein und dadurch Oligomere mit Polymerisationsgraden von 1-20 bilden. Geeignete und bevorzugte Verbindungen sind dabei solche entsprechend der Formel I, wie sie in der EP-A 84 108 beschrieben sind.

Bevorzugte Amine sind solche der Formel I: 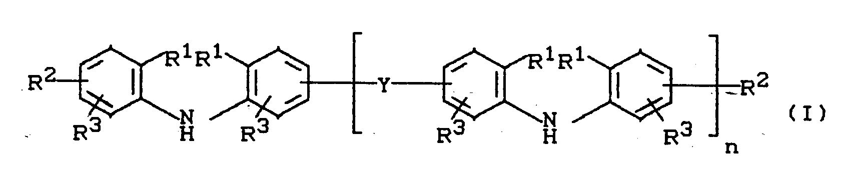
in der
- R¹ und R³: gleich oder verschieden, Wasserstoff, eine CH₃-, C₂H₅- oder Isopropylgruppe bedeuten, R¹ vorzugsweise H oder C₂H₅, R³ vorzugsweise H, wobei R³ in o-, m- und p-Stellung zum N-Atom stehen kann,
- R²: für Wasserstoff, eine C₄-C₁₂-Alkyl-, C₇-C₁₂-Aralkyl- oder C₅-C₁₂-Cycloalkylgruppe vorzugsweise für Wasserstoff, einen Benzyl-, Styryl-, Methylstyryl-, tert.-Butyl-, tert.-Amyl-, Isononyl-, Cyclohexyl-, Methylcyclohexylrest oder einen der folgenden Reste 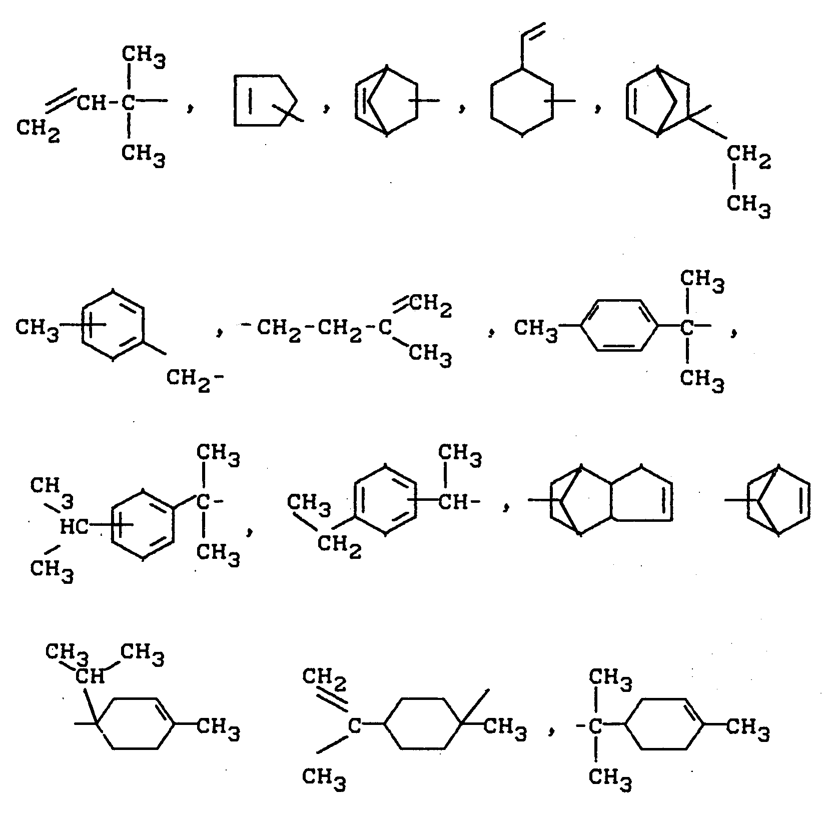 und in o- oder p-Stellung zum N-Atom stehen kann,
- n: eine ganze Zahl von 1-29, vorzugsweise 1-19 darstellt, besonders bevorzugt 1-12 und
- Y: für einen bifunktionellen, nicht monoolefinisch ungesättigten Rest mit der Bedeutung von R² mit Ausnahme von Wasserstoff steht und außerdem bis zu 50 Mol %, vorzugsweise 40 Mol-%,
-CH₂-O-CH₂-, -CH₂-S-CH₂-, -S- oder =CH-R⁴ mit R⁴ Wasserstoff, C₁-C₆-Alkyl oder C₅-C₆-Cycloalkyl bedeuten kann und in o- oder p-Stellung zum N-Atom steht;
- Y: steht vorzugsweise für einen Rest 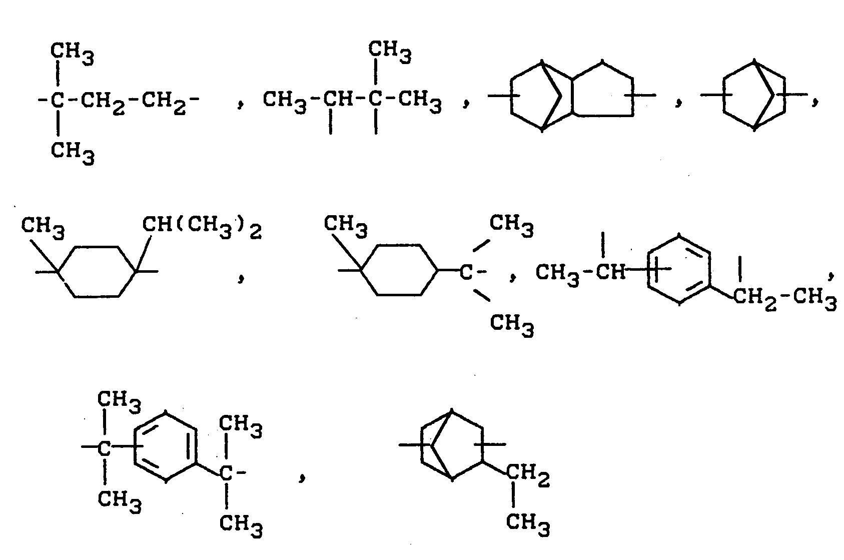 oder bis zu 50 Mol-%, für 〉CH-R⁴.

Ferner können Amin-Stabilisatoren nach DE-OS 3 701 738, die durch Umsetzung von Isopropenylphenolen oder Bisphenolen von Typ Bisphenol A mit Diphenylamin oder Phenothiazin oder Derivaten dieser Verbindungen erhalten werden, in der erfindungsgemäß verwendeten Stabilisator-Kombination eingesetzt werden.

Mit den erfindungsgemäßen Stabilisator-Kombinationen können Mischungen aus synthetischen Polyamiden mit thermoplastischen, elastomeren Kautschuk-Schlagzähmodifikatoren sehr effektiv stabilisiert, insbesondere thermostabilisiert, werden.

Die Polyamide werden durch Polykondensation von Diaminen mit Dicarbonsäuren, durch Polymerisation von Lactamen oder durch Polykondensation von Aminocarbonsäuren erhalten. Bevorzugt werden aliphatische Polyamide, insbesondere solche auf Adipinsäure und Hexamethylendiamin oder aus Caprolactam, Mischungen aus diesen Polyamiden bzw. solche Mischpolyamide, in denen die letztgenannten Komponenten die Hauptbestandteile darstellen.

Unter elastomeren Kautschuk-Modifikatoren werden handelsübliche Elastomere, welche zur Schlagzähmodifikation üblicherweise herangezogen werden, vorzugsweise Olefin/Acrylsäureester/Acrylsäure Terpolymere, Olefin (Ethylen/Propylen)/Acrylsäure/Maleinsäureanhydrid Terpolymere oder Maleinsäureanhydrid gepfropfte EPM- bzw. EPDM-Kautschuke eingesetzt.

Es sind dabei in den Polyamid-Mischungen 1 bis 50 %, bevorzugt 3 bis 25 %, besonders bevorzugt 5 bis 15 %, an elastomeren Kautschuk-Schlagzähmodifikatoren enthalten.

Die Einarbeitung erfolgt durch einzelne oder gemeinsame Zugabe der Stabilisatorkomponenten oder ihrer Konzentrate ("masterbatches") und Vermischung, vorzugsweise in der Schmelze, durch Verarbeitung in Ein- oder Mehrwellenschnecken-Extrudern oder Knetern (Buss-Kneter). Weitere Angaben zur Einarbeitung finden sich beispielsweise in der in EP-A 84 108, S. 10, Zeile 19 bis Seite 11, Zeile 6, beschrieben.

Dabei kann es von Vorteil sein, wegen einer besseren Dispergierung Konzentrate von Polyamid und einem der erfindungsgemäßen Kautschuke herzustellen oder Konzentrate der Amine, Cu-Verbindungen oder der Stabilisator-Mischungen einzusetzen.

Die erfindungsgemäßen stabilisierten Polyamid/Kautschukmischungen eignen sich in besonderer Weise zur Herstellung technischer Teile für die Elektro-, Maschinen- und Kfz-Industrie.

Die (Temperatur)Alterung erfolgt in den Beispielen durch 31 Tage Lagerung in einem Umluftofen bei 140°C.

### Beispiel 1 (Vergleich zum Stand der Technik)

Es werden 58,4 % eines handelsüblichen Polyamid 66 mit einer relativen Viskosität von 3,0 (m-Kresol/1 %/25°C) mit 30 Gew-% einer handelsüblichen Glasfaser (Bayer CS 7919), 10 % eines handelsüblichen Ethylen/Acrylsäureester/Maleinsäureanhydrid Terpolymeren (Lotader 3300), 0,2 % eines Entformungsmittels (Hostalub WE 1) sowie 0,1 % einer CuJ/Triphenylphosphin-Mischung (im Verhältnis 1:1) und 0,1 % KBr, über einen Extruder (Werner&Pfleiderer, ZSK 53) homogenisiert.

Nach ISO 180/1C hergestellte Prüfkörper zeigten eine Schlagzähigkeit von 48 kJ/m², nach Temperaturalterung (140°C, 31 d, Umluftofen) 32 kJ/m².

(Eine Verdopplung der Stabilisatorkonzentration ergab gleiche Abbau-Werte).

### Beispiel 2

Ein wie in Beispiel 1 beschrieben stabilisiertes, schlagzähmodifiziertes Polyamidprodukt wurde mit Diphenylamin (0,5 Gew.-% in der stabilisierten Polyamidmasse) versetzt. Es wurde eine Schlagzähigkeit von 49 kJ/m² erhalten, nach Alterung betrug der Wert 38 kJ/m².

### Beispiel 3

Es wurde das in Beispiel 1 beschriebene Produkt mit einem Kondensationsproduktes aus Diphenylamin und Aceton (0,5 Gew.-% in der stabilisierten Masse) versetzt. Es wurde eine Schlagzähigkeit von 49 kJ/m² erhalten, nach Alterung betrug der Wert 44 kJ/m².

### Beispiel 4 (Vergleichsbeispiel)

Es wurde analog Beispiel 1 verfahren, wobei als Kautschuk 10 Gew.-% eines mit Maleinsäureanhydrid gefropften EPM-Kautschuks (Exxelor VA 1803) eingesetzt wurde. Es wurde eine Schlagzähigkeit von 55 kJ/m² erhalten, nach Alterung betrug die Schlagzähigkeit 24 kJ/m².

### Beispiel 5

Es wurde wie in Beispiel 4 verfahren, wobei zusätzlich Diphenylamin (0,5 Gew.-% in der stabilisierten Polyamidmasse) zugesetzt wurde. Es wurde eine Schlagzähigkeit von 55 kJ/m² erhalten, nach Alterung betrug der Wert 32 kJ/m².

### Beispiel 6

Es wurde wie in Beispiel 4 verfahren, wobei 0,3 % eines Kondensationsproduktes aus Diphenylamin und Limonen zugesetzt wurde. Es wurden Schlagzähigkeiten von 55 kJ/m² erhalten, nach Alterung betrug der Wert 40 kJ/m².

## Patentansprüche

1. Stabilisatorkombinationen für schlagzäh modifizierte Polyamide aus
a) Cu^{I}-halogeniden
b) Triphenylphosphin
c) gegebenenfalls Alkalihalogeniden
und
d) Aminen der Formel (I) 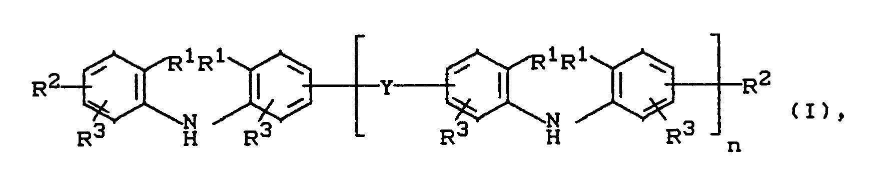
in der
R¹ und R³ gleich oder verschieden, Wasserstoff, eine CH₃-, C₂H₅- oder Isopropylgruppe bedeuten, wobei R³ in o-, m- und p-Stellung zum N-Atom stehen kann,
R² für Wasserstoff, eine C₄-C₁₂-Alkyl-, C₇-C₁₂-Aralkyl- oder C₅-C₁₂-Cycloalkylgruppe einen Benzyl-, Styryl-, Methylstyryl-, tert.-Butyl-, tert.-Amyl-, Isononyl-, Cyclohexyl-, Methylcyclohexylrest oder einen der folgenden Reste 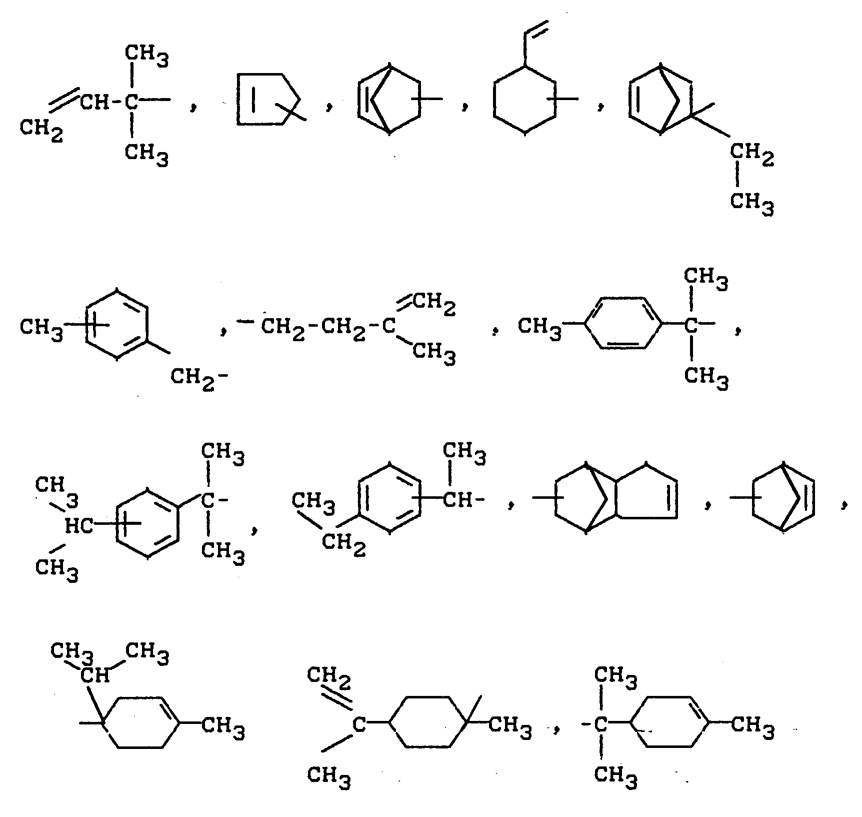 und in o- oder p-Stellung zum N-Atom stehen kann,
n eine ganze Zahl von 1-29 darstellt und
Y für einen bifunktionellen, nicht monoolefinisch ungesättigten Rest mit der Bedeutung von R² mit Ausnahme von Wasserstoff steht und außerdem bis zu 50 Mol %, vorzugsweise 40 Mol-%,
-CH₂-O-CH₂-, -CH₂-S-CH₂-, -S- oder =CH-R⁴ mit R⁴ Wasserstoff, C₁-C₆-Alkyl oder C₅-C₆-Cycloalkyl bedeuten kann und in o- oder p-Stellung zum N-Atom steht und oder Diphenylamin
wobei das Gewichtsverhältnis von a) zu b) 3:1 bis 1:3,
das Gewichtsverhältnis von (a + b) : c (falls c) vorhanden) 1:7,5 bis 2,5:1
und das Gewichtsverhältnis von (a + b + c) : (d) von 0,5:1 bis 1:20
beträgt.

2. Stabilisatorkombinationen nach Anspruch 1, bei denen
die Cu^{I}-halogenide a) Cu^{I}-chlorid, Cu^{I}-bromid oder Cu^{I}-iodid,
b) Triphenylphosphin,
die Alkalihalogenide c) Li-, Na- oder K-chloride, -bromide oder -iodide sind
und das Gewichtsverhältnis
(a:b) von 2:1 bis 1:2,
von (a+b):c von 1:4 bis 1:1,
und
von (a+b+c):d von 0,75:1 bis 1:10
beträgt.

3. Stabilisatorkombinationen nach Ansprüchen 1 und 2, bei denen die Cu^{I}-halogenide a)
Cu^{I}-iodid,
b) Triphenylphosphin,
die Alkalihalogenide c) LiCl und KBr
sind und das Verhältnis von
a:b 1,2:1 bis 0,8:1,
(a+b):c 1:2,5 bis 1:3,5
und
(a+b+c):d 1:1 bis 1:5
beträgt.

4. Verwendung der erfindungsgemäßen Stabilisator-Kombinationen nach Ansprüchen 1-3 in einem Verfahren zur Herstellung stabilisierter, schlagzähmodifizierter Polyamide, wobei 0,05 bis 5 Gew.-% der Stabilisator-Kombination (a,b, gegebenenfalls c, sowie d) in die schlagzähmodifizierten Polyamide eingemischt werden.

5. Stabilisierte, schlagzähmodifizierte Polyamide, welche
95 - 99,95 Gew.-% schlagzähmodifizierte Polyamide,
die aus
50 - 99 Gew.-% an Polyamiden
und
1 - 50 Gew.-% an thermoplastisch einarbeitbaren, elastomeren Schlagzähmodifikatoren bestehen,
und
0,05 - 5 Gew.-% an Stabilisatorkombinationen (a-d) nach Anspruch 1,
sowie gegebenenfalls zusätzlich übliche, weitere Zusatzstoffe wie Füllstoffe, Verstärkungsstoffe wie Glasfasern oder Hochmodul-organische Fasern, Farbstoffe, Pigmente, weitere Antioxidantien/UV- oder Thermostabilisatoren, Verarbeitungshilfsmittel oder Flammschutzmittel
enthalten.

6. Stabilisierte, schlagzähmodifizierte Polyamide nach Anspruch 5
welche
95-99,5 Gew.-% schlagzähmodifizierte Polyamide,
die aus
75-97 Gew.-% an Polyamiden
und aus
3-35 Gew.-% aus thermoplastisch, einarbeitbaren, elastomeren Schlagzähmodifikatoren bestehen,
und
0,05-5 Gew.-% an Stabilisator-Kombinationen (a-d),
sowie gegebenenfalls zusätzlich übliche weitere Zusatzstoffe
enthalten.

7. Stabilisierte, schlagzähmodifizierte Polyamide nach Ansprüchen 5 und 6, enthaltend
0,01 - 1 Gew.-% an Cu^{I}-halogeniden (a)
0,02 - 3 Gew. -% Triphenylphosphine b)
gegebenenfalls bis 3 Gew.-% an Alkalihalogeniden (c)
und
0,05 - 5 Gew.-% an Aminen d)
enthalten.

8. Stabilisierte, schlagzähmodifizierte Polyamide nach Anspruch 7, enthaltend
0,03-0,25 Gew.-% an Cu^{I}-halogeniden a),
0,03-0,75 Gew.-% an Triphenylphosphin
0-1,5 Gew.-% an Alkalihalogeniden c)
und
0,2-2 Gew.-% an Aminen d).

9. Stabilisierte, schlagzähe Polyamide nach Anspruch 1, welche als aminische Stabilisatoren d) Kondensationsprodukte der Formel (I) aus gegebenenfalls substituierten Diphenylaminen und Aceton enthalten.

## Claims

1. Stabilizer combinations for impact-modified polyamides of
a) Cu^{I} halides
b) triphenyl phosphine
c) optionally alkali metal halides
and
d) amines corresponding to formula (I): 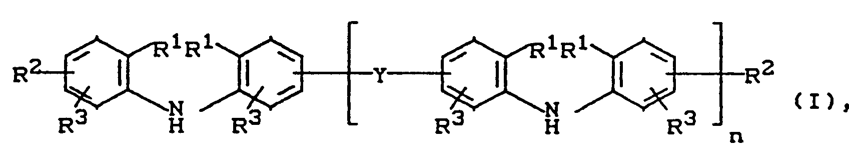
in which
R¹ and R³ may be the same or different and represent hydrogen, a CH₃, C₂H₅ or isopropyl group (R³ may be in the o-, m- and p-position to the N atom),
R² is hydrogen, a C₄₋₁₂ alkyl, C₇₋₁₂ aralkyl or C₅₋₁₂ cycloalkyl group, a benzyl, styryl, methyl styryl, tert. butyl, tert.amyl, isononyl, cyclohexyl or methyl cyclohexyl radical or one of the following radicals: 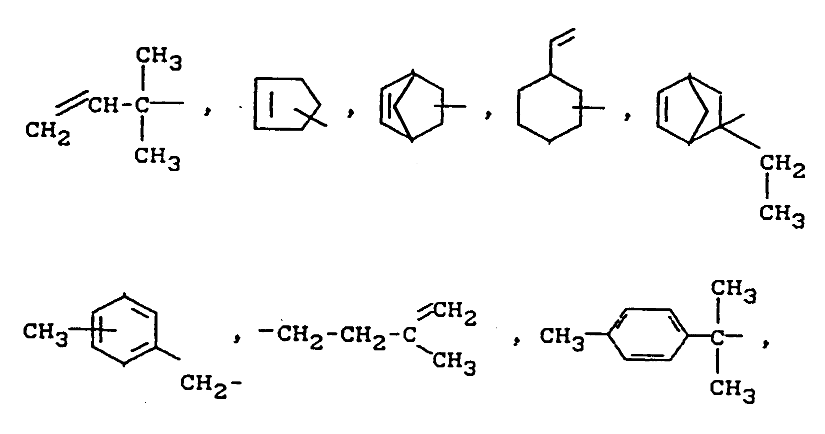 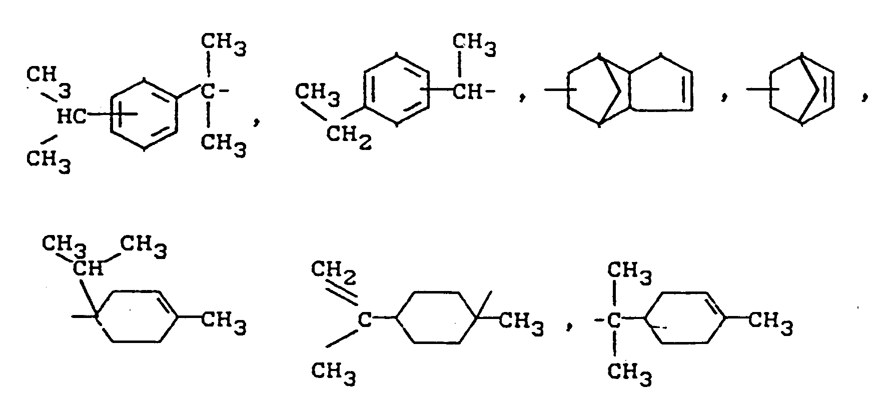 and may be in the o- or p-position to the N atom,
n is an integer of 1 to 29, and
Y is a difunctional, non-monoolefinically unsaturated radical with the same meaning as R² except for hydrogen, in addition to which up to 50 mole-% and preferably 40 mole-% of Y may represent -CH₂-O-CH₂-, -CH₂-S-CH₂-, -S- or =CH-R⁴, where R⁴ = hydrogen, C₁₋₆ alkyl or C₅₋₆ cycloalkyl, and may be in the o- or p-position to the N atom,
and/or diphenylamine,
the ratio by weight of a) to b) being 3:1 to 1:3,
the ratio by weight of (a + b) to c) (where c is present) being 1:7.5 to 2.5:1 and
the ratio by weight of (a + b + c) to d) being 0.5:1 to 1:20.

2. Stabilizer combinations as claimed in claim 1 in which
the Cu^{I} halide a) is Cu^{I} chloride, Cu^{I} bromide or Cu^{I} iodide,
b) is triphenyl phosphine,
the alkali metal halide c) is Li, Na or K chloride, bromide or iodide
and the ratio by weight of
a) to b) is 2:1 to 1:2,
(a + b) to c) is 1:4 to 1:1 and
(a + b + c) to d) is 0.75:1 to 1:10.

3. Stabilizer combinations as claimed in claims 1 and 2, in which
the Cu^{I} halide a) is Cu^{I} iodide,
b) is triphenyl phosphine,
the alkali metal halide c) is LiCl or KBr
and the ratio of
a) to b) is 1.2:1 to 0.8:1,
(a + b) to c) is 1:2.5 to 1:3.5 and
(a + b + c) to d) is 1:1 to 1:5.

4. The use of the stabilizer combinations claimed in claims 1 to 3 in a process for the production of stabilized, impact-modified polyamides, 0.05 to 5% by weight of the stabilizer combination (a, b, optionally c and d) being incorporated in the impact-modified polyamides.

5. Stabilized, impact-modified polyamides containing
95 to 99.95% by weight of impact-modified polyamides consisting of
50 to 99% by weight of polyamides and
1 to 50% by weight of elastomeric, thermoplastically incorporable impact modifiers
and
0.05 to 5% by weight of the stabilizer combinations (a - d) according to claim 1
and optionally other typical additives, such as fillers, reinforcing materials, such as glass fibres or high-modulus organic fibres, dyes, pigments, other antioxidants and UV or heat stabilizers, processing aids or flameproofing agents.

6. Stabilized, impact-modified polyamides as claimed in claim 5 containing
95 to 99.5% by weight of impact-modified polyamides consisting of
75 to 97% by weight of polyamides and
3 to 35% by weight of elastomeric, thermoplastically incorporable impact modifiers
and
0.05 to 5% by weight of the stabilizer combinations (a - d) and optionally other typical additives.

7. Stabilized, impact-modified polyamides as claimed in claims 5 and 6 containing
0.01 to 1% by weight of Cu^{I} halides a),
0.02 to 3% by weight of triphenyl phosphines b),
optionally up to 3% by weight of alkali metal halides c) and
0.05 to 5% by weight of amines d).

8. Stabilized, impact-modified polyamides as claimed in claim 7 containing
0.03 to 0.25% by weight of Cu^{I} halides a),
0.03 to 0.75% by weight of triphenyl phosphine,
0 to 1.5% by weight of alkali metal halides c)
and
0.2 to 2% by weight of amines d).

9. Stabilized, impact-modified polyamides as claimed in claim 1 which contain condensates of formula (I) of optionally substituted diphenyl amines and acetone as the aminic stabilizers d).

## Revendications

1. Combinaisons de stabilisants pour des polyamides modifiés résistant au choc contenant
a) des halogénures de Cu^{I}
b) de la triphénylphosphine
c) le cas échéant des halogénures alcalins
et
d) des amines de formule (I) 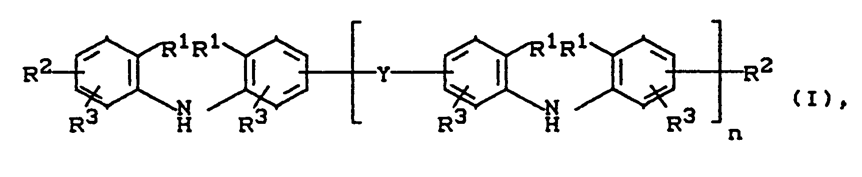
dans laquelle
R¹ et R³ sont identiques ou différents, et peuvent représenter l'hydrogène, un groupe CH₃, C₂H₅- ou isopropyle, R³ peut être en position o-, m- et p- par rapport à l'atome d'azote,
R² représente l'hydrogène, un groupe alkyle en C₄-C₁₂, un groupe aralkyle en C₇-C₁₂ ou un groupe cycloalkyle en C₅-C₁₂, un reste benzyle, styryle, méthylstyryle, tert-butyle, tert-amyle, isononyle, cyclohexyle, méthylcyclohexyle ou l'un des restes suivants 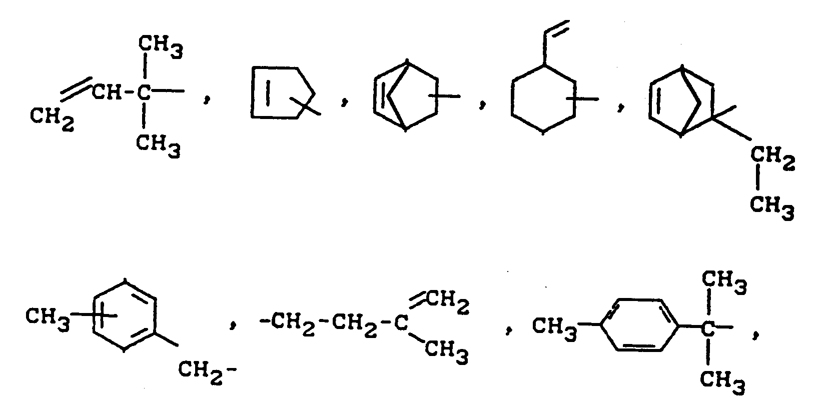 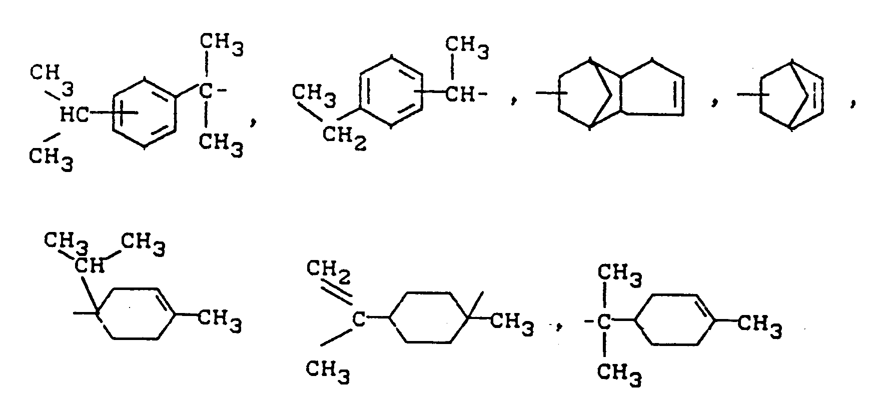 et il peut être en position o- ou p- par rapport à l'atome N,
n est un nombre entier de 1-29 et
Y représente un reste insaturé bifonctionnel non monooléfinique avec la signification de R² à l'exception de l'hydrogène et en outre il représente jusqu'à 50 % molaire, de préférence 40 % molaire,
-CH₂O-CH₂-, -CH₂-S-CH₂-, -S- ou =CH-R⁴ avec R⁴ qui représente l'hydrogène, un alkyle en C₁-C₆ ou un cycloalkyle en C₅-C₆ et se trouve en position o- ou p- par rapport à l'atome N et/ou de la diphénylamine
où la proportion pondérale de a) à b) est de 3 : 1 à 1 : 3,
la proportion pondérale de (a + b) : c (au cas où c) est présent) est 1 : 7,5 à 2,5 : 1 et la proportion pondérale de (a + b + c) : (d) est de 0,5 : 1 à 1 : 20.

2. Compositions de stabilisants selon la revendication 1, dans lesquelles les halogénures de Cu^{I} a) représentent le chlorure de Cu^{I}, le bromure de Cu^{I} ou l'iodure de Cu^{I},
b) la triphénylphosphine,
les halogénures alcalins c) sont les chlorures, les bromures ou les iodures de Li, Na ou K,
et la proportion pondérale
(a:b) est de 2 : 1 à 1 : 2,
celle de (a + b) : c est 1 : 4 à 1 : 1,
et
celle de (a + b + c) : d est 0,75 : 1 à 1 : 10.

3. Combinaisons de stabilisants selon les revendications 1 et 2, dans lesquelles les halogénures de Cu^{I} a) sont
l'iodure de Cu^{I},
b) la triphénylphosphine,
les halogénures alcalins c) sont LiCl et KBr
et la proportion de
a:b est 1,2 : 1 à 0,8 : 1,
(a + b) : c est 1 : 2,5 à 1 : 3,5
et
(a + b + c) : d est 1 : 1 à 1 : 5.

4. Utilisation des combinaisons de stabilisants selon les revendications 1-3 dans un procédé de production de polyamides stabilisés résistant au choc, où on incorpore 0,05 à 5 % en poids de la combinaison de stabilisants (a, b, le cas échéant c, ainsi que d) dans les polyamides résistant au choc.

5. Polyamides modifiés résistant au choc stabilisés, dans lesquels se trouvent
95 - 99,95 % en poids de polyamides résistant au choc, qui sont constitués de
50 - 99 % en poids de polyamides
et
1 - 50 % en poids de modifiants élastomères apportant la résistance au choc qu'on peut incorporer par voie thermoplastique,
et
0,05 - 5 % en poids de combinaisons de stabilisants (a-d) selon la revendication 1,
ainsi que des additifs supplémentaires habituellement présents comme des charges, des charges renforçantes comme des fibres de verte ou des fibres organiques à module élevé, des colorants, des pigments, d'autres antioxydants/stabilisants UV ou stabilisants à la chaleur, des additifs de transformation ou des ignifugeants.

6. Polyamides modifiés résistant au choc stabilisés selon la revendication 5, qui contiennent
95-99,5 % en poids de polyamides modifiés résistant au choc qui sont constitués de
75-97 % en poids de polyamides
et de
3-35 % en poids de modifiants élastomères apportant la résistance au choc incorporables par voie thermoplastique,
et
0,05 - 5 % en poids de combinaisons de stabilisants (a-d),
ainsi que le cas échéant d'autres additifs usuels.

7. Polyamides modifiés résistant au choc stabilisés selon les revendications 5 et 6, qui comprennent
0,01 - 1 % en poids d'halogénures de Cu^{I} (a)
0,02 - 3 % en poids de triphénylphosphine b)
le cas échéant jusqu'à 3 % en poids d'halogénures alcalins (c)
et
0,05 - 5 % en poids d'amines d).

8. Polyamides modifiés résistant au choc stabilisés selon la revendication 7, qui contiennent
0,03 - 0,25 % en poids d'halogénures de Cu^{I} a),
0,03 - 0,75 % en poids de triphénylphosphine
0 - 1,5 % en poids d'halogénures alcalins c)
et
0,2 - 2 % en poids d'amines d).

9. Polyamides résistant au choc stabilisés selon la revendication 1, qui contiennent comme stabilisants aminés d) des produits de condensation de formule (I) de diphénylamines substituées le cas échéant et d'acétone.
